(19) **Europäisches Patentamt**
**European Patent Office**
**Office européen des brevets**

(11) **EP 2 506 003 B1**

(12) **EUROPEAN PATENT SPECIFICATION**

(45) Date of publication and mention
of the grant of the patent:
**05.12.2018 Bulletin 2018/49**

(51) Int Cl.:
***G01N 27/82*** *(2006.01)*

(21) Application number: **12161913.4**

(22) Date of filing: **28.03.2012**

(54) **Methods And Apparatus For The Inspection Of Plates And Pipe Walls**

Methoden und Vorrichtung zur Untersuchung von Blechen und Rohrwänden

Procédés et appareils pour l'inspection de plaques de métal et de parois de conduites

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011 GB 201105193**
**28.06.2011 GB 201110889**

(43) Date of publication of application:
**03.10.2012 Bulletin 2012/40**

(73) Proprietor: **Eddyfi UK Limited**
**Swansea SA6 8QY (GB)**

(72) Inventors:
• **Pearson, Neil Randal**
**Llanelli,**
**Carmarthenshire SA5 8EE (GB)**

• **Packer, Simon Andrew Horsfall**
**Carmarthen Road**
**Swansea SA5 8FJ (GB)**

• **Priewald, Robin Harald**
**9805 Baldramsdorf (AT)**

(74) Representative: **Gallafent, Richard John**
**Gallafents Ltd**
**1 Sans Walk**
**London EC1R 0LT (GB)**

(56) References cited:
**EP-A1- 1 308 721    DE-A1- 3 904 612**
**GB-A- 2 012 966    US-A- 5 293 117**
**US-B2- 7 215 117**

**Description**

This invention relates to methods and apparatus for inspecting plates or pipe walls of magnetisable material and in particular methods and apparatus for using magnetic reluctance to gain data about the plate or pipe wall being inspected. The plates to be inspected may be part of a wall or floor of a storage tank or used for other purposes.

It is known that if the poles of a magnetising means such as a horseshoe magnet or its equivalent, their polarities being opposite (e.g. one of the magnets having its north pole in contact with the yoke and the other its south pole in contact with the yoke) are placed in contact with or closely adjacent to a piece of magnetisable material, e.g. a steel plate, or pipe wall, or a plate or pipe wall of ferrous, diamagnetic or paramagnetic material, a magnetic field will flow through the horseshoe magnet, the plate and back to the horseshoe magnet, a so called magnetic circuit. An equivalent to a horseshoe magnet may be comprised, for example, of a yoke of magnetisable material to which are attached one or more magnets and optionally one or more pole pieces of magnetisable material. Most typically, the magnet or magnets are in contact with the yoke and the pole pieces, where present, in contact with the face of the magnet remote from the yoke.

The magnetic circuit can alternatively be generated by use of one or more permanent magnets or one or more electro-magnets. The resistance of the materials in that circuit to the flow of the magnetic field is known as magnetic reluctance. The magnetic reluctance of a magnetic circuit may be measured with a magnetic flux sensor, transducer or similar known measurement means.

The magnetic reluctance in a magnetic circuit is influenced by the geometry of the various elements of the materials through which the circuit passes and the magnetic permeability of those materials.

When discussing horseshoe magnets and equivalent magnets it is generally most convenient to describe them in two dimensions. It will be appreciated that in reality objects are three dimensional, but that for such magnets the two dimensional situation at most positions along length of the third dimension is constant unless described otherwise. An application of the use of magnetic reluctance in the inspection of plates or pipes is described in US5293117A (HWANG) in which there is described an apparatus and method for the inspection of the walls of a pipe comprising the steps of (a) creating a magnetic circuit through a magnetising unit, the pipe wall and two airgaps between the plate and pipe wall; (b) measuring the magnetic reluctance in at least one air gap; (c) incorporating the the measured magnetic reluctance into an algoritham; and (d) recording or displaying each measured magnetic reluctance in association with the position at which it was measured.

According to the present invention there is provided an apparatus for inspecting plates or pipe walls of magnetisable material as disclosed in independent claim 1.

It is known that at its simplest a magnetic circuit incorporating a horseshoe magnet or an equivalent thereto, a plate or pipe wall of magnetisable material and an air gap between the poles of the magnet and the plate or pipe wall may be considered to be comprised of a yoke, pole 1 and pole 2, the specimen to be inspected, and an air gap 1 between pole 1 and the specimen and an air gap 2 between pole 2 and the specimen. The magnetic reluctance of the circuit can be described by the following algorithm where there are two air gaps

$$R_{circuit} = R_{yoke} + R_{pole\ 1} + R_{pole\ 2} + R_{air\ gap\ 1} + R_{air\ gap\ 2} + R_{specimen}$$

Where

R= magnetic reluctance
$R_{circuit}$ = the total reluctance of the magnetic circuit

The magnetic reluctance for the whole of the air gap can be approximated by taking one or more reluctance measurements in the air gap and extrapolating from those measurements. A major factor in those extrapolations will be the area over which the or each sensor measures the magnetic reluctance.

The magnetic reluctance of the yoke, pole 1 and pole 2 can be measured or calculated by known techniques before, during or after manufacture of an item of test apparatus. If it is known what thickness the air gaps 1 and 2 will be, the magnetic reluctance of those air gaps can be calculated in a similar fashion by known techniques. Alternatively, the magnetic reluctance of $R_{air\ gap\ 1}$ and $R_{air\ gap\ 2}$ can be measured by application of the magnetic circuit to a calibrated specimen. Once $R_{air\ gap\ 1}$ and $R_{air\ gap\ 2}$ are known in controlled conditions an inspection apparatus used to perform the method may be used upon plates or pipe walls to be inspected.

Preferably, repeated measurements of the magnetic reluctance ($R_{circuit}$) of the magnetic circuit are taken as the inspection apparatus is moved across the surface of a plate or pipe wall to be inspected, the measured values for $R_{circuit}$ averaged, and the value for $R_{specimen}$ calculated. Once $R_{specimen}$ is known, use of the algorithm

$$R_{specimen} = \frac{l}{\mu_0 \mu_r A}$$

where

R$_{specimen}$= calculated magnetic reluctance
l= the length of the circuit in the specimen;
$\mu_0$= the magnetic permeability of free space;
$\mu_r$= the relative magnetic permeability of the material;
A= the cross-sectional area of the circuit allows the average cross sectional area and hence average thickness of the specimen to be calculated if the distance between the poles of the magnetising unit is known and assumptions about the width of the magnetic circuit within the circuit made.

Knowledge of the thickness of the plate or pipe wall being inspected may be useful in itself. In a particularly preferred method, this is combined with a magnetic flux leakage (MFL) (also known as magnetic flux exclusion (MFE), but simply termed magnetic flux leakage hereafter) inspection method of inspecting a plate or pipe wall of magnetisable material. In such an embodiment, the calculated thickness of the a plate or pipe wall may be used to calibrate the apparatus used for the magnetic flux leakage inspection or, more preferably, the data generated by the magnetic flux leakage inspection. The calibration can either be on-line, that is as the inspection proceeds, or off-line, that is applied to the magnetic flux leakage data before, after or before and after it has been gathered. The measurement of the magnetic reluctance can occur simultaneously with the magnetic flux leakage inspection utilising the same magnetic circuit. It will be appreciated that the averaging of a number of magnetic reluctance measurements will serve to cancel, or minimise to an acceptable extent, any effects the presence of discontinuities in the plate or pipe wall being inspected may cause.

Magnetic flux leakage inspection techniques that use a magnetising unit, one or more sensors to detect magnetic flux leakage caused by discontinuities in the plate or pipe wall of magnetisable material being inspected and data analysis means for analysing the data from the sensors are known and will not be discussed in any detail herein. However, the method may be performed using essentially the same apparatus as that used for known magnetic flux leakage. This is advantageous because known magnetic flux leakage inspection apparatus can be readily adapted for use in the method.

Preferably the magnetic reluctance of the circuit R$_{circuit}$ is repeatedly measured and each measurement compared to previous and subsequent measurements. Because the relative magnetic permeability of the air in the air gaps is very small relative to the other materials that the magnetic circuit passes through, any change in the thickness of the air gap has a significant and measurable effect on the magnetic reluctance of the circuit R$_{circuit}$. This has the effect that an increase in the magnetic reluctance of the circuit R$_{circuit}$ relative to a previous measurement can be correlated to one or both of the air gaps increasing in thickness. Such an increase in thickness is most likely to be due to the presence of a pit or discontinuity in/on the surface of the plate or pipe wall being inspected that is adjacent to the inspection apparatus. A pit or discontinuity in/on the surface of the plate or pipe wall being inspected that is adjacent the inspection apparatus is known as a top surface discontinuity. The location of such top surface discontinuities are recorded together with position information.

It is particularly preferred that the results of this preferred method are combined with the results of a magnetic flux leakage inspection so that the discontinuities identified in the magnetic flux leakage inspection may be identified as top or bottom surface discontinuities. This is possible because magnetic flux leakage inspection methods are known to be able to identify both top surface discontinuities and discontinuities on the surface of the plate or pipe wall distant from the testing apparatus, known as bottom surface discontinuities. Magnetic flux leakage inspection methods are not, however, at all good at distinguishing top and bottom surface discontinuities from each other. To date, manual inspection, or other separate technologies such as ultrasonic testing (UT) or eddy current (EC) probes are required to achieve this. They also need extra electronics and system components over and above those used in magnetic flux leakage inspection apparatus and hence the combined apparatus has increased complexity and cost. According to the present invention, apparatus is comprised of:

(i) a magnetising unit suitable for creation of a magnetic circuit through the magnetising unit and the plate or pipe wall;
(ii) measurement means for measuring the magnetic reluctance in the magnetic circuit;
(iii) data processing means; and
(iv) data storage and or display means, is characterised by the feature set out in the main claim.

The apparatus may comprise a frame supporting the magnetising means, the frame being so configured that the magnetising means is held a predetermined distance from the surface of the pate or pipe wall to be inspected. Most preferably, the frame is provided with one or more wheels rollers or similar means to allow the frame to move smoothly across the surface of the plate or pipe wall to be inspected.

It is preferred that the magnetising means is comprised of a yoke of magnetisable material and two poles which are attached to the yoke, each pole comprising at least a magnet, which is a permanent magnet, preferably a rare earth magnet, or an electro- magnet, and having a pole face at the opposite end of the pole to the interface between the pole and the yoke. The apparatus is preferably so constructed that when the frame is placed upon the surface of a plate or pipe wall to be inspected each pole face is adjacent to the surface of the plate or pipe wall to be inspected and separated therefrom by an air gap.

The measurement means for measuring the magnetic reluctance of the magnetic circuit are located within at least one of the air gaps. It is particularly preferred that the or each pole face defines a recess within which at least one magnetic reluctance measuring means may be located. The magnetic reluctance measuring means may be any suitable means including indirect measuring means, such as the most preferred measuring means which are flux density sensors which give results which may be used to calculate the magnetic reluctance. The particular benefit of locating the magnetic reluctance measuring means within the recess is that the pole face will protect the or each magnetic reluctance measuring means from damage due to inadvertent contact with the surface of the plate or pipe wall to be inspected or material located on the surface of the plate or pipe wall. The size and shape of the recess is most preferably chosen as one that is going to have minimum effect on the magnetic flux passing between the pole and the plate or pipe wall. It is most preferred that the recess is a corner rebate, a chamfer or a similar shape.

In an alternative, the magnetising unit includes at least one pole which is comprised of a at least a pole piece and the pole face of that pole is comprised of at least two pole face portions, one pole face portion being more remote from the interface between the pole and the yoke than the other pole face portions. Where the pole is comprised of a magnet and a pole piece, the magnet is between the yoke and the pole piece.

Preferably the pole piece is a single element, there are two pole face portions joined by a side face, and at the junction of the side face and the pole face portion nearest the interface between the pole and the yoke there is a groove extending towards the interface between the pole and the yoke. In this construction, the two pole face portions are preferably substantially planar and substantially parallel to each other, the side wall joining the pole face portions is substantially perpendicular to the two pole face portions, and the means for measuring the magnetic reluctance is fixed to the pole face portion nearest the interface between the pole and the yoke.

Where the pole piece is comprised of first and second pole elements, the first and second pole elements being separated by a gap extending from the interface between the pole and the yoke or the interface between the pole piece and the magnet to the pole faces, the ends of the first and second pole elements form the pole face portions and the means for measuring the magnetic reluctance is fixed to the pole face portion nearest the interface between the pole and the yoke.

The measurement means for measuring the magnetic reluctance of the magnetic circuit are located within at least one of the air gaps, and the or each pole that is associated with a measurement means is so configured as to cause the flow of the magnetic flux between the pole and the plate or pipe wall to pass through at least two discrete magnetic fields. The measurement means is located so as to measure the magnetic reluctance in one of those fields. Most preferably the configuration of the pole is such that the strength of at least one of the discrete magnetic fields is significantly smaller than the other discrete magnetic fields, and the measurement means measures the magnetic reluctance in the or one of the smaller strength magnetic fields.

To achieve the discrete magnetic fields, it is preferred that the or each pole that is associated with a measurement means defines a corner rebate which includes a notch or groove between the two faces that define the rebate. The groove has the physical effect that the pole has two pole faces that face the plate or pipe wall, one of which is further from the plate or pipe wall than the other. The groove can be "U" or "V" shaped and has a dimension (measured in the direction of the shortest line that goes between the yoke and the plate or pipe wall and passes through the groove, the "yoke-plate direction") greater than zero, and preferably equal to or greater than 2mm. The width of the groove in a direction perpendicular to the yolk-plate direction and the longitudinal axis of the groove is preferably between 1 and 10mm and most preferably between 4 to 6mm.

Alternatively, the discrete magnetic fields can be achieved by forming the pole from a pair of pole elements that are separated from each other by an air gap. Preferably the air gap is between 1 and 1 0mm wide, and most preferably between 4 and 6mm wide. The pole pieces can be of different dimensions, those dimensions affecting how big an air gap there is between the pole faces and the plate or pipe wall, and / or the area of the pole face each pole element has. Other methods of channelling the magnetic field within the pole and between the pole faces and the plate or pipe wall can be adopted to achieve the same effect. Such means may include use of poles comprised of more than one material, each material having different magnetic properties.

An advantage of the embodiments of the present invention that include creating discrete magnetic fields each with their own strength is that one of the discrete magnetic fields can be designed so as to be of a suitable strength to be optimal for the operation of the measurement means.

In at least the embodiments of the present invention that include creating discrete magnetic fields each with their own strength it is preferred that the measurement means for measuring the magnetic reluctance of the magnetic circuit are located as close to the surface of the plate or pipe wall as possible. It is most preferred that when the apparatus of the present invention is positioned for use in connection with a plate or pipe wall that the part of the measurement means closest to the surface of the plate or pipe wall is substantially the same distance from the plate or pipe wall as that part of the pole that is closest to the plate or pipe wall.

Different distances of the measurement means from the plate or pipe wall are possible in other embodiments, the distance being calculated so as to achieve the highest range of signals being generated by the measurement range (the peak to peak range). Furthermore, it is preferred that the measurement means are placed in the centre of the pole face with which it / they is / are associated. This minimises interference in the readings by the measurement means by any edge effects of the magnetic field within which the measurement means are situated and form the adjacent magnetic field from the other pole face of the pole. In some embodiments of the present invention it is preferred to have the null field of the X component of the magnetic field that the measurement means is measuring set to zero (i.e. magnetic flux lines travel perpendicular between the surface of the pole piece and the surface of the plate or pipe wall being inspected when no top surface defects are present), so there is minimal offset of the sensors when at a 90 degree angle, this renders the strength of the field is less important.

In accordance with the present invention the or each of the magnet reluctance measurement means is orientated so as to measure only a portion or vector of the magnetic flux in the air gaps. This approach has particular advantages in that it is possible to use commercially available measurement means in magnetic flux fields that would, if the measurement means were orientated so as to measure the whole of the magnetic flux directly, saturate the measurement means so as to render it inoperative. It is also advantageous because if only a portion or vector of the magnetic flux is measured, any change in the magnetic flux caused by the measurement means passing over a discontinuity in the plate or pipe wall is a greater proportion of the measured magnetic flux than if the whole of the magnetic flux were being measured.

Preferably the or each magnetic reluctance measurement means is orientated so as to measure a magnetic flux vector at an angle to the z axis in the range of 45° to 90° and most preferably 80° to 85° to the z axis. The orientation of the or each magnetic reluctance measurement means to the x and y axes may be chosen to provide the optimal measurements.

The apparatus of the present invention will most preferably further comprise magnetic flux leakage measuring means. Those magnetic flux leakage measuring means are preferably located in a position where the optimal magnetic flux leakage measurements may be obtained. Most preferably, magnetic flux leakage measuring means are located between two of the poles in a known fashion.

In apparatus according to the present invention the magnetic reluctance measurement means may be set out in a linear array orientated in a direction perpendicular to both the expected direction of travel of the apparatus across the surface of the plate or pipe wall to be inspected, and, at any given position along the length of the array, perpendicular to the a line normal to the surface of the plate or pipe wall to be inspected at that position.

Inspection apparatus according to the present invention will be further described and explained by way of an example with reference to the accompanying drawings in which:

Figure 1 shows a schematic side view of an example of a first inspection apparatus according to the present invention;
Figure 2 shows an enlarged view of the magnetising unit of Figure 1;
Figure 3 shows an enlarged view of an example of a second magnetising unit according to the present invention;
Figure 4 shows a detail of the magnetising unit of Figure 3; and
Figure 5 shows an enlarged view of an example of a third magnetising unit according to the present invention,

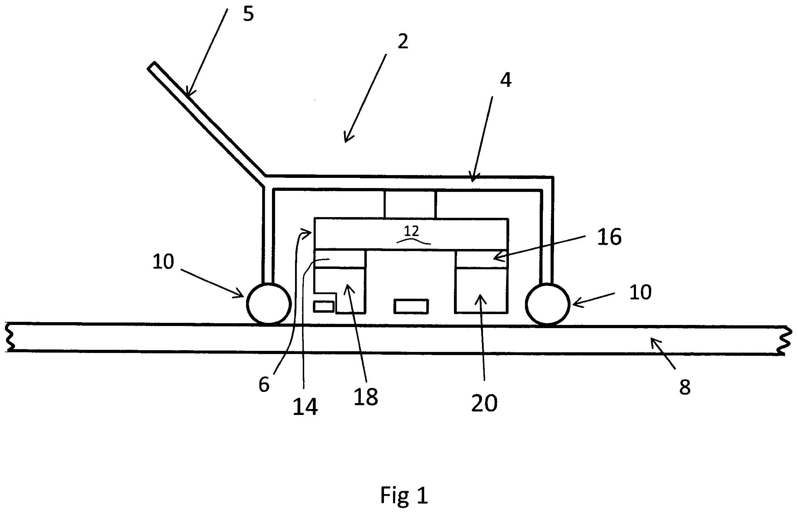

With reference to Figure 1, an inspection apparatus (2) for inspecting plates or pipe walls of magnetisable material is comprised of a frame (4) with a handle (5) on which is mounted a magnetising unit (6). The frame (4) is supported on the surface of a plate (8) to be inspected via wheels (10).

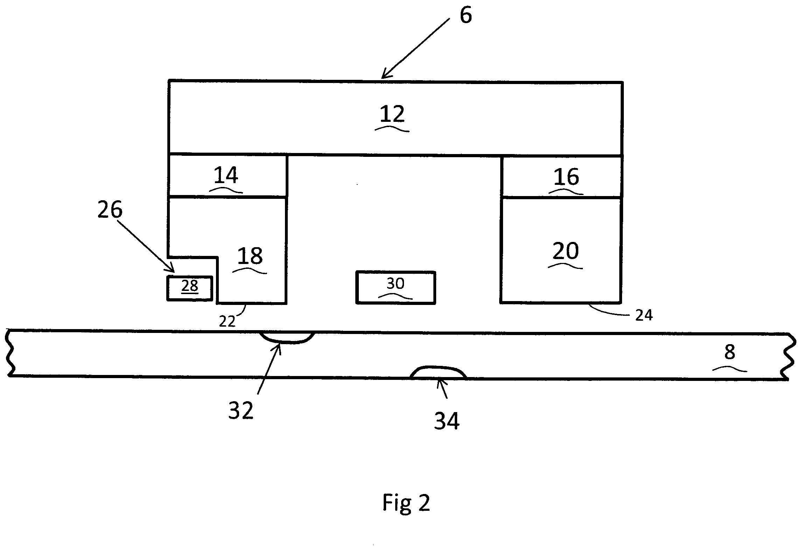

With reference to Figure 2, the magnetising unit (6) is comprised of a yoke (12), two permanent magnets (14, 16), and two pole pieces (18,20) which are associated with the permanent magnets (14, 16). The permanent magnets are rare earth magnets and the yoke (12) and the poles (18, 20) are both made of steel. The poles (18, 20) are present to protect the magnets (14, 16) from impacting or scraping on the surface of plate (8). The magnetising unit (6) is held on the frame (4) (by means not shown) in such a position that pole faces (22, 24) of the poles (18, 20) are separated from the surface of the plate (8) by a small air gap. Typically this air gap will be around 4mm in thickness.

The pole (18) includes a corner rebate (26) which is of suitable dimensions to allow one or more magnetic reluctance measuring means (28) to be mounted in the rebate. The mounting of the magnetic reluctance measuring means (28) in the rebate (26) is desirable because the body of the pole (18) protects the magnetic reluctance measuring means (28) from impact with or scraping on the surface of the plate (8). In other embodiments of the present invention the rebate (26) can be located elsewhere on pole face (22) and additionally, or alternatively, there can be a rebate in poll face (24) in which are mounted additional or alternative magnetic reluctance measuring means (28).

Mounted between the poles (18, 20) (by means not shown) are one or more magnetic flux density sensors such as Hall effect sensors (30) configured so as to be able to detect any magnetic flux leakage from the portion of the magnetic circuit that passes through the plate (8) adjacent the magnetic flux density sensors (30). In alternative embodiments of the present invention other forms of measurement means such as ultrasonic testing apparatus, or one or more eddy current probes may be located between the poles (18, 20).

In use, the inspection apparatus (2) preferably moves across the surface of the plate (8) causing the magnetic circuit created by the magnetising unit and passing through the portion of plate (8) beneath and between the poles (18, 20) to move through the plate (8) at the same time, and measurements of magnetic reluctance of the magnetic circuit are repeatedly taken by magnetic reluctance measuring means (28). At the same time, the output from the magnetic flux density sensors (30) is measured.

When the pole face (22) passes over a representative discontinuity (32) on the surface of the plate (8) adjacent the inspection apparatus (2) the thickness of the air gap between the pole face (22) and the surface of the plate (8) increases and the magnetic reluctance of the magnetic circuit increases. This leads to an increase in measured value by the magnetic reluctance measuring means (28). When the magnetic flux density sensors (30) pass over the discontinuity (32) a leakage of magnetic flux from the plate (8) is detected by the magnetic flux density sensors (30). In contrast, when the pole face (22) passes over a representative discontinuity (34) on the surface of the plate (8) distant from the inspection apparatus (2) the thickness of the air gap between the pole face (22) and the surface of the plate (8) is unchanged and the magnetic reluctance of the magnetic circuit is substantially unchanged. This leads to little or no increase in measured value by the magnetic reluctance measuring means (28). When the magnetic flux density sensors (30) pass over the discontinuity (34) a leakage or loss of magnetic flux from the plate (8) is detected by the magnetic flux density sensors (30). Because of this difference, comparison of the outputs obtained from the magnetic reluctance measuring means (28) and the magnetic flux density sensors (30) for a particular position allows the surface on which a discontinuity is located to be determined.

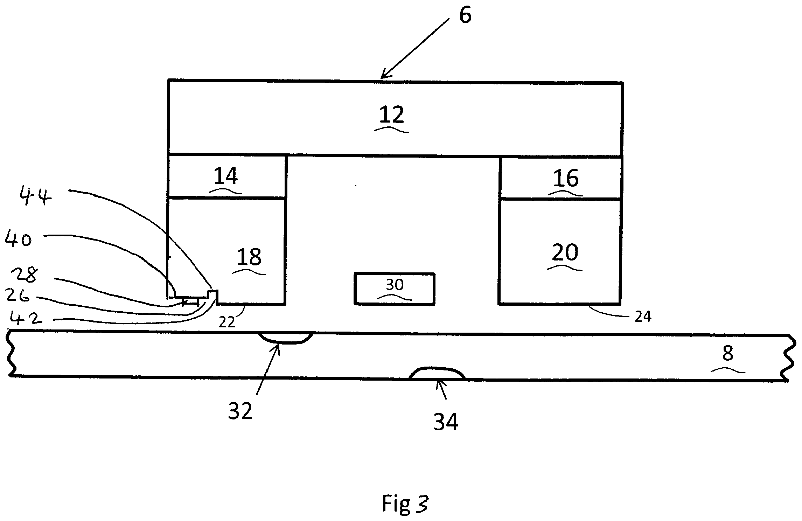

With reference to Figure 3, and using the same reference numerals where appropriate, a second example of a magnetising unit (6) is comprised of a yoke (12), two permanent magnets (14, 16), and two pole pieces (18, 20) which are associated with the permanent magnets (14, 16). The permanent magnets are rare earth magnets and the yoke (12) and the pole pieces (18, 20) are both made of steel. The pole pieces (18, 20) are present to protect the magnets (14, 16) from impacting or scraping on the surface of plate (8). The magnetising unit (6) is held on the frame (4) (by means not shown) in such a position that pole faces (22, 24) of the pole pieces (18, 20) are separated from the surface of the plate (8) by a small air gap. Typically this air gap will be around 4mm in thickness.

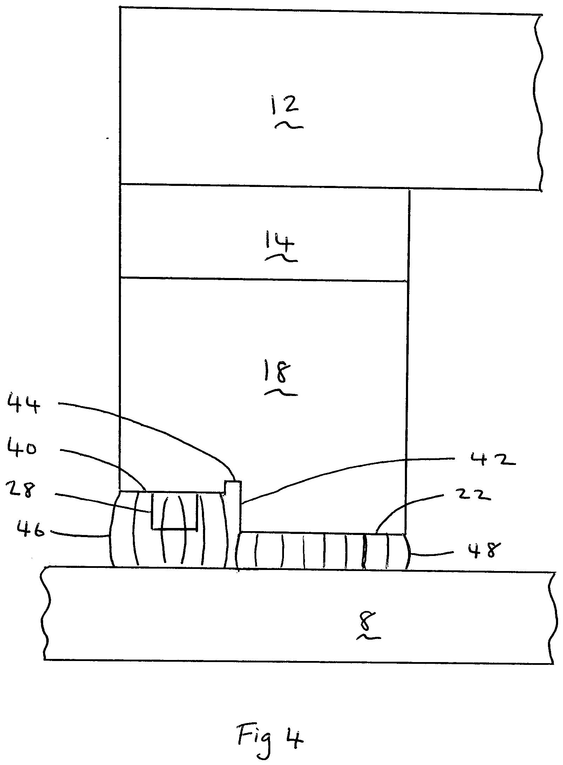

The pole piece (18) includes a corner rebate (26) which is of suitable dimensions to allow one or more magnetic reluctance measuring means (28) to be mounted in the rebate. Between the faces that define the rebate (40, 42) is a groove (44). The groove (44) has the effect of dividing the magnetic flux flowing through the pole piece (18) so that a portion flows through the face (40) in the rebate and a portion through the face (22). In Figure 4 the magnetic fields that are a result of the flow of the magnetic flux between the pole piece (18) and the plate or pipe wall (8) are represented by field lines (46) and (48) respectively. The air in the air gap between the faces (40) and (22) has a significantly higher magnetic reluctance than the material from which the pole piece (18) is made and accordingly, the majority of the magnetic flux will flow through pole magnetic field (48). A smaller amount of flux will flow through magnetic field (46) rendering the size or strength of the magnetic field (46) more suitable for measurement by the magnetic reluctance measuring means (28).

The mounting of the magnetic reluctance measuring means (28) in the rebate (26) is desirable because the body of the pole (18) protects the magnetic reluctance measuring means (28) from impact with or scraping on the surface of the plate (8).

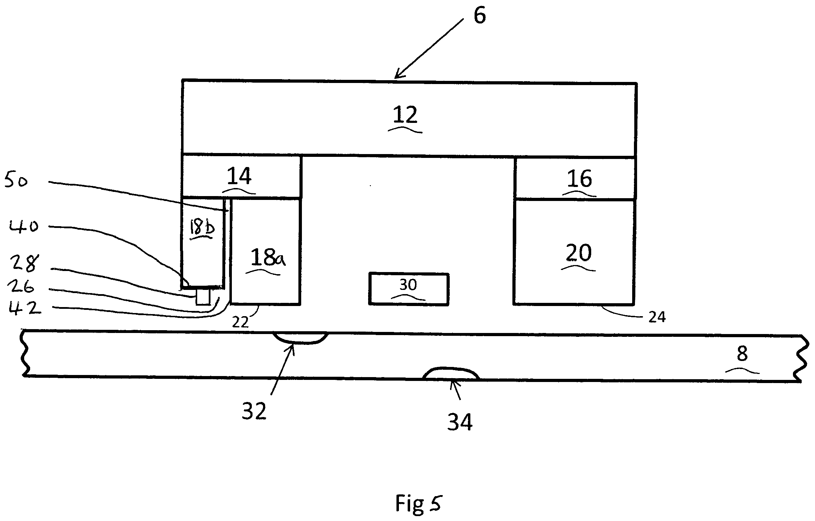

With reference to Figure 5, and using the same reference numerals where appropriate, a third example of a magnetising unit (6) is comprised of a yoke (12), two permanent magnets (14, 16), and three pole pieces (18a, 18b, 20) which are associated with the permanent magnets (14, 16). The permanent magnets are rare earth magnets and the yoke (12) and the pole pieces (18a, 18b, 20) are made of steel. The pole pieces (18a, 18b, 20) are present to protect the magnets (14, 16) from impacting or scraping on the surface of plate (8). The magnetising unit (6) is held on the frame (4) (by means not shown) in such a position that pole faces (22, 24) of the pole pieces (18a, 20) are separated from the surface of the plate (8) by a small air gap. Typically this air gap will be around 4mm in thickness.

The pole pieces (18a, 18b) extend different distances from the magnet (14) toward plate (8) with pole piece (18b) extending less distance than pole piece (18a). The pole pieces (18a) and (18b) are separated by an air filled gap (50). In alternative embodiments of the present invention the gap (50) can be filed by an alternative material with a high magnetic reluctance.

The different dimensions of the pole pieces (18a) and (18b) causes the creation of an effective rebate (26) in which one or more magnetic reluctance measuring means (28) are mounted. The arrangement of the pole pieces (18a) and (18b) and the air gap (50) between them has the effect of dividing the magnetic flux flowing around the magnetic circuit (passing through magnet (16), yoke (12), magnet (14), pole pieces (18a) and (18b), plate (8), and pole (20)) so that a portion flows through pole piece (18a) and a portion through pole piece (18b). This has the same effect as illustrated in Figure 4 discussed above.

The mounting of the magnetic reluctance measuring means (28) on pole piece (18b) is also desirable because the body of the pole piece (18a) protects the magnetic reluctance measuring means (28) from impact with or scraping on the surface of the plate (8).

## Claims

1. Apparatus for inspecting plates or pipe walls (8) of magnetisable material in which the apparatus is comprised of:

   (i) a magnetising unit (6) suitable for creation of a magnetic circuit through the magnetising unit (6) and at least one air gap between the magnetising unit (6) and the plate or pipe wall (8);
   (ii) measurement means (28) for measuring the magnetic reluctance in at least one air gap;
   (iii) data processing means;
   (iv) data storage and or display means;

   wherein the magnetising unit (6) is comprised of a yoke (12) of magnetisable material and two or more poles (14, 18 and 16, 20) which are attached to the yoke (12), at least one pole (14, 18 or 16, 20) or the yoke (12) comprising at least one magnet (14 or 16), and both poles (14, 18 and 16, 20) having a pole face (22, 24) at the opposite end of the pole (14, 18 and 16, 20) to the interface between the pole (14, 18 and 16, 20) and the yoke (12), and in which the apparatus is so constructed that the yoke (12) is supported on a frame (4) so that when the frame (4) is placed upon the surface of a plate or pipe wall (8) to be inspected each pole face (22, 24) is adjacent to the surface of the plate or pipe wall (8) to be inspected and separated therefrom by an air gap, and at least one of the pole faces (22, 24) at least partially defines a recess (26) suitably dimensioned to allow one or more magnetic reluctance measurement means (28) to be fixed within the recess (26), and **characterised in that** the means for measuring the magnetic reluctance (28) is in the air gap and orientated at an angle to the z-axis so as to measure only a portion or vector of the magnetic flux density, the z-axis is parallel to the expected orientation of the magnetic flux lines passing through the air gap assuming that there is no discontinuity in the plate or pipe wall, the x axis is perpendicular to the z axis and parallel to the expected orientation of the magnetic flux lines passing through the plate or pipe wall between the poles of the magnetising unit, and the y axis is perpendicular to the x- and z-axes.

2. Apparatus according to Claim 1 in which the angle to the z-axis is in the range of 45° to 90°.

3. Apparatus according to Claim 2 wherein the angle to the z-axis is in the range of 80° to 85°.

4. Apparatus according to any of Claims 1 to 3 in which the apparatus further comprises a magnetic flux leakage measurement means (30), ultrasonic testing apparatus, or one or more eddy current probes.

## Patentansprüche

1. Vorrichtung zur Untersuchung von Platten oder Rohrwandungen (8) aus magnetisierbarem Material, wobei die Vorrichtung umfasst:

   (i) eine Magnetisierungseinheit (6), die dazu ausgebildet ist, einen Magnetkreis durch die Magnetisierungseinheit (6) und wenigstens einem Luftspalt zwischen der Magnetisierungseinheit (6) und der Platte oder der Rohrwandung (8) zu erzeugen;
   (ii) Messmittel (28) zur Messung des magnetischen Widerstandes in wenigstens einem Luftspalt;
   (iii) Datenverarbeitungsmittel;
   (iv) Datenspeicher- und/oder Anzeigemittel;

   wobei die Magnetisierungseinheit (6) aus einem Joch (12) aus magnetisierbarem Material und zwei oder mehr an dem Joch (12) befestigten Polen (14, 18 und 16, 20) besteht, wobei wenigstens ein Pol (14, 18 oder 16, 20) oder das Joch (12) wenigstens einen Magnet (14 oder 16) umfasst, und beide Pole (14, 18 und 16,20) an dem der Grenzfläche zwischen dem Pol (14, 18 und 16, 20) und dem Joch (12) gegenüberliegenden Ende des Pols (14, 18 und 16, 20) eine Polfläche (22, 24) aufweisen, und wobei die Vorrichtung derart ausgebildet ist, dass das Joch (12) auf einem Rahmen (4) derart gehalten ist, dass, wenn der Rahmen (4) auf der Oberfläche einer zu untersuchenden Platte oder Rohrwandung (8) positioniert wird, jede Polfläche (22, 24) benachbart zur zu untersuchenden Oberfläche der Platte oder Rohrwandung (8) und davon durch einen Luftspalt beabstandet positioniert ist, und wenigstens eine der Polflächen (22, 24) zumindest teilweise eine Ausnehmung (26) bildet, die derart dimensioniert ist, dass ein oder mehrere Messmittel (28) zur Messung des magnetischen Widerstands innerhalb der Ausnehmung (26) angebracht werden kann/können, und **dadurch gekennzeichnet, dass** das Messmittel (28) zur Messung des magnetischen Widerstands sich in dem Luftspalt befindet und in einem Winkel zu der Z-Achse derart orientiert ist, dass nur ein Abschnitt oder Vektor der magnetischen Flussdichte gemessen wird, die Z-Achse parallel zu der erwarteten Orientierung der sich durch den Luftspalt erstreckenden magnetischen Flusslinien verläuft unter der Annahme, dass die Platte oder Rohrwandung keine Diskontinuität aufweist, die X-Achse senkrecht zur Z-Achse und parallel zu der erwarteten Orientierung der sich durch die Platte oder Rohrwandung zwischen den Polen der Magnetisierungseinheit erstrechenden magnetischen Flusslinien verläuft, und die Y-Achse senkrecht zu der X-Achse und der Z-Achse verläuft.

**2.** Vorrichtung gemäß Anspruch 1, wobei der Winkel zu der Z-Achse im Bereich zwischen 45° und 90° liegt.

**3.** Vorrichtung gemäß Anspruch 2, wobei der Winkel zu der Z-Achse im Bereich von 80° bis 85° liegt.

**4.** Vorrichtung gemäß einem der vorhergehenden Ansprüche, wobei die Vorrichtung des Weiteren ein Messmittel (30) zur Messung des magnetischen Streuflusses, eine Ultraschall-Messvorrichtung oder eine oder mehrere Wirbelstrommesssonden aufweist.

## Revendications

**1.** Appareil d'inspection de plaques de métal ou de parois de conduites (8) en matériau magnétisable dans lequel l'appareil est constitué par :

(i) une unité de magnétisation (6) apte à créer un circuit magnétique à travers l'unité de magnétisation (6), et au moins un entrefer entre l'unité de magnétisation (6) et la plaque de métal ou la paroi de conduites (8) ;
(ii) un moyen de mesure (28) pour mesurer la réluctance magnétique dans au moins un entrefer ;
(iii) un moyen de traitement de données ;
(iv) un moyen de stockage de données et/ou un moyen d'affichage de données ;

dans lequel l'unité de magnétisation (6) est constituée par une culasse (12) en matériau magnétisable et par: deux pôles ou plus (14, 18 et 16, 20) qui sont fixés à la culasse (12), au moins un pôle (14, 18 ou 16, 20) ou la culasse (12) comprenant au moins un aimant (14 ou 16), et les deux pôles (14, 18 et 16, 20) présentant une face de pôle (22, 24) à l'extrémité opposée du pôle (14, 18 et 16, 20) vers l'interface entre le pôle (14, 18 et 16, 20) et la culasse (12), et dans lequel l'appareil est construit de telle sorte que la culasse (12) est maintenue sur un cadre (4) de sorte que, lorsque le cadre (4) est placé sur la surface d'une plaque de métal ou d'une paroi de conduites (8) à inspecter, chaque face de pôle (22, 24) est adjacente à la surface de la plaque de métal ou de la paroi de conduites (8) à inspecter, et est séparée de celle-ci par un entrefer, et au moins l'une des faces de pôle (22, 24) définit au moins partiellement un évidement (26) dimensionné de manière appropriée afin de permettre la fixation, au sein de l'évidement (26), d'un ou plusieurs moyens de mesure de réluctance magnétique (28), et **caractérisé en ce que** le moyen de mesure de réluctance magnétique (28) est situé dans l'entrefer et est orienté selon un angle par rapport à l'axe des z, de manière à mesurer uniquement une partie ou un vecteur de la densité de flux magnétique, l'axe des z est parallèle à l'orientation attendue des lignes de flux magnétique traversant l'entrefer, en supposant l'absence de discontinuité dans la plaque de métal ou la paroi de conduites, l'axe des x est perpendiculaire à l'axe des z et est parallèle à l'orientation attendue des lignes de flux magnétique traversant la plaque ou la paroi de conduites entre les pôles de l'unité de magnétisation, et l'axe des y est perpendiculaire aux axes des x et z.

**2.** Appareil selon la revendication 1, dans lequel l'angle par rapport à l'axe des z est situé dans la plage comprise entre 45° et 90°.

**3.** Appareil selon la revendication 2, dans lequel l'angle par rapport à l'axe des z est situé dans la plage comprise entre 80° et 85°.

**4.** Appareil selon l'une quelconque des revendications 1 à 3, dans lequel l'appareil comprend en outre un moyen de mesure de fuite de flux magnétique (30), un appareil de contrôle par ultrasons, ou une ou plusieurs sondes à courant de Foucault.

Fig 1

Fig 2

EP 2 506 003 B1

Fig 3

Fig 4

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5293117 A, HWANG